# FASCICULE DE BREVET EUROPEEN

(11) **EP 0 404 687 B1**
(45) Date de publication et mention de la délivrance du brevet: **05.01.1994**
(21) Numéro de dépôt: 90401769.6
(22) Date de dépôt: 22.06.1990
(51) Int. Cl.: A47F 3/14, B65G 7/12, G10G 7/00

(54) **Ensemble pour protéger et porter un piano pendant son déménagement**
Schütz- und Trageeinheit für ein Klavier beim Umzug
Protection and support unit for a piano during its removal

(30) Priorité: 23.06.1989 FR 8908422
(43) Date de publication de la demande: 27.12.1990
(73) Titulaire: RACLET, SOCIETE ANONYME:, 72600 Mamers (FR)
(72) Inventeur: Fraysse, Gérard, F-72600 Mamers (FR)
(74) Mandataire: Caunet, Jean

(56) Documents cités:
- FR-A- 2 160 339
- GB-A- 862 179
- GB-A- 2 059 756
- US-A- 4 431 226

## Description

La présente invention concerne le domaine du matériel de déménagement.

Il concerne plus particulièrement un ensemble de protection et de portage d'un piano droit ou à queue durant son déménagement, comportant au moins deux sangles de portage ceinturant ledit piano dans des plans verticaux transversaux situés au voisinage des extrémités dudit piano et présentant chacune une boucle de serrage et deux poignées de préhension.

Il est connu d'utiliser des coffres comportant des poignées de portage et dont l'intérieur est capitonné pour le déménagement d'objets précieux de petites dimensions et d'employer des housses de protection de tailles et formes adaptées pour protéger les meubles tels que que les tables, les fauteuils etc... Les meubles recouverts de la housse de protection sont ensuite soulevés et portés vers des camions par les déménageurs. Ces meubles ont des poids relativement faibles et le déménageur se débrouille pour trouver sur le meuble des endroits de préhension pour ses mains.

On connaît par FR-A-2 160 339, qui représente le préambule de la revendication 1, des sangles de portage comportant une boucle de serrage et deux poignées de préhension et destinées à ceinturer des colis non manutentionnables mécaniquement et de forme globalement parallélépipédique.

Il n'existe actuellement sur le marché aucun matériel satisfaisant pour la protection des pianos et leur portage par des hommes. Les pianos, par comparaison avec les meubles courants, sont non seulement précieux, mais de plus ils sont lourds et encombrants. Leur déplacement, même sur une faible distance, nécèssite plusieurs déménageurs qui sont à la fois forts et expérimentés dans le soulèvement et le portage des objets lourds et précieux. De plus, la forme du piano et la répartition des poids rendent difficile le choix des points de prise les plus favorables pour le portage à mains nues, ce qui peut entraîner des accidents de personnel.

Le but de la présente invention est de pallier ce manque de matériel de déménagement d'un piano, et de proposer un ensemble pour protéger et porter un piano durant son déménagement qui, d'une part, protège le piano contre des éraflures éventuelles et qui, d'autre part, présente des moyens de préhension manuelle ce qui facilite le travail des déménageurs et améliore la sécurité du personnel.

Le but est atteint selon l'invention par le fait que l'ensemble mentionné ci-dessus comporte, en outre,
une housse de protection adaptée au type de piano et conformée pour recouvrir et protéger au moins la face supérieure et les faces latérales du piano et des passants prévus sur la face exteme de la housse de protection, guidant lesdites sangles de portage ceinturant ledit piano recouvert de ladite housse, lesdites poignées de préhension prévues de part et d'autre de la partie inférieure du piano droit ou du côté de la joue rectiligne du piano à queue, celui-ci étant dans la position de transport soit verticale sur ses pieds (piano droit), soit couchée sur le côté (piano à queue).

Grâce à cette structure, d'une part le piano est protégé par la housse, et d'autre part, les déménageurs peuvent se servir des poignées de préhension pour soulever et porter le piano. Ils ont ainsi de bonnes prises manuelles de chaque côté du piano à transporter. Les passants maintiennent les sangles et les empêchent de riper sur les parois du piano.

Avantageusement, l'ensemble comporte en outre une sangle de serrage guidée par des passants et ceinturant ledit piano recouvert de ladite housse soit au droit des parois latérales dudit piano immédiatement au-dessus du couvercle de clavier (piano droit), soit au droit de la joue incurvée et d'au moins une partie des parois latérales adjacentes (piano à queue), ladite sangle de serrage présentant une boucle de serrage.

La housse est réalisée dans une toile de lin doublée sur sa face interne d'une couche de mousse fixée sur un tissu en jersey et est recouverte de cuir sur les zones de sa face exteme voisines des arêtes du piano.

La housse est munie de moyens d'ajustement permettant de régler l'une de ses dimensions en fonction du gabarit du piano.

De préférence, les sangles de portage sont munies de deux boucles d'accrochage fixées respectivement au voisinage des points d'ancrage des poignées de préhension.

Les boucles de serrage des sangles sont entourées par un manchon en cuir destiné à protéger le piano.

D'autres modes particuliers de réalisation selon l'invention sont indiqués dans les revendications 3 et 4.

D'autres caractéristiques et avantages de l'invention ressortiront de la description suivante fait en référence aux dessins annexés dans lesquels :
- la figure 1 est une vue en perspective d'un piano à queue couché sur le côté et équipé de l'ensemble de protection et de portage selon l'invention, la vue montrant le dessus du piano.
- la figure 2 est une vue en perspective du même piano à queue montrant le dessous du piano.
- la figure 3 montre la dispositif des différentes sangles d'un ensemble de protection et de portage pour piano à queue.
- la figure 4 est une vue en perspective d'un piano droit équipé d'un ensemble de protection et de portage et
- la figure 5 montre la fixation de la poignée de préhension et de la boucle d'accrochage sur la sangle de soulèvement.

L'ensemble de protection et de portage 1 destiné au déménagement d'un piano 2 comporte une housse de protection 3 recouvrant la face supérieure et les faces latérales ou joues du piano et maintenue sur le piano 2 à l'aide de sangles 4 guidées dans des passants 5 prévus sur la face externe de la housse de protection 3.

La housse de protection 3 est conformée au type de piano et présente une paroi supérieure 6 recouvrant le dessus du piano et prolongée par une jupe 7 destinée à protéger les faces latérales du piano 2. Elle est réalisée dans une toile de lin qui est doublée sur sa face interne par une couche de mousse fixée sur un tissu en jersey et qui est recouverte de panneaux de cuir sur les zones 8 de sa face externe voisines des arêtes du piano 2.

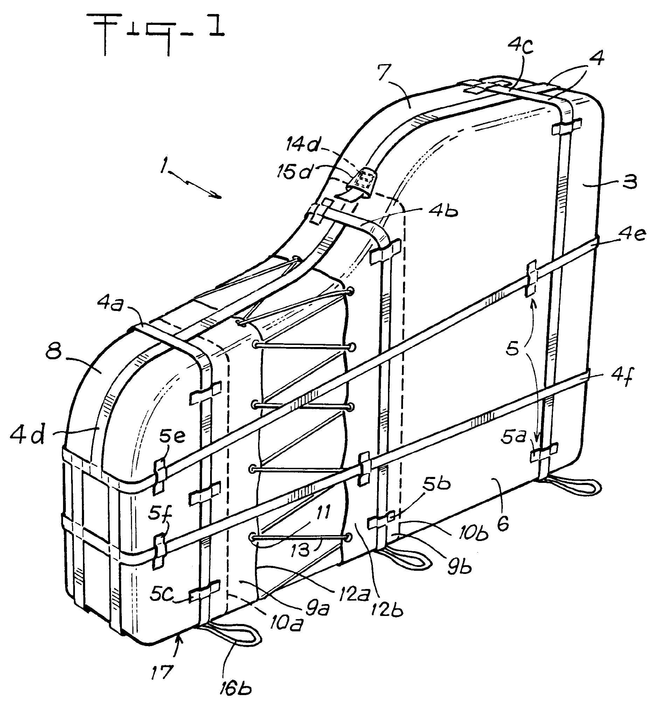

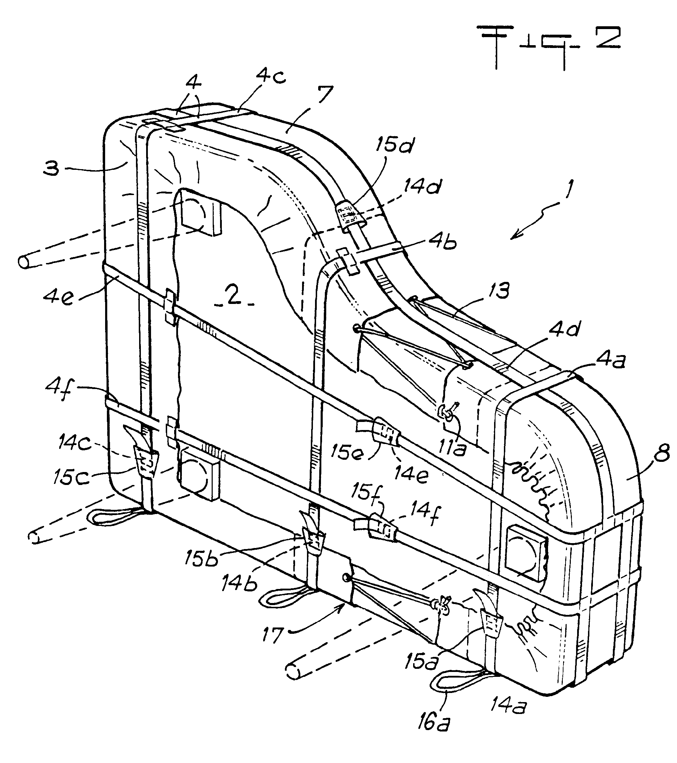

Comme on le voit clairement sur les figures 1 et 2, l'une des dimensions de la housse de protection 3 est ajustable grâce à deux pans de toile de lin 9a, 9b disposés sur la faxe externe de la housse de protection 3 par leurs bords éloignés 10a et 10b et comportent des oeillets 11 près de leurs bords voisins 12a et 12b. Un cordon de serrage 13 fixé par l'une de ses extrémités à un oeillet 11a passe alternativement par un oeillet 11 de l'un des pans 9a et 9b de telle manière que, par une traction appliquée sur l'autre extrémité du cordon de serrage 13, la taille de la housse de protection 3 soit ajustée au gabarit du piano 2 à transporter. Les portions de la housse de protection 3 recouvertes par les pans 9a et 9b ne sont pas recouvertes par des panneaux en cuir.

Dans l'exemple de réalisation pour piano à queue des figures 1 et 2, le piano 2 est montré dans sa position de transport c'est-à-dire couché sur sa joue rectiligne. La housse de protection 3 est maintenue sur le piano 2 à l'aide de trois sangles de portage 4a, 4b, 4c ceinturant le piano 2 et disposées dans des plans verticaux transversaux, la sangle 4b dans un plan médian et les sangles 4a et 4c près des extrémités du piano 2.

Chaque sangle de portage 4a, 4b, 4c comporte une boucle de serrage 14a, 14b, 14c protégée par un manchon en cuir 15a,15b, 15c de manière à éviter des éraflures sur la paroi externe du piano 2 et comporte, en plus, deux poignées de préhension 16a, 16b, réalisées dans un cordage tressé et dont les points d'ancrage sont disposés de chaque côté de la partie inférieure 17 du piano 2 en position de transport. Les sangles de portage 4a, 4b, 4c sont guidées dans des passants appropriés 5a, 5b, 5c.

Une sangle de serrage 4d est disposée autour de la jupe 7 au droit des parois latérales du piano 2. La sangle de serrage 4d comporte également une boucle de serrage 14d protégée par un manchon en cuir 15d.

Des sangles supplémentaires 4e et 4f, guidées par des passants 5e et 5f et comportant des. boucles de serrage 14e et 14f protégées par les manchons en cuir 15e et 15f sont prévues dans des plans sensiblement perpendiculaires aux plans des sangles de soulèvement 4a, 4b et 4c et au plan de la sangle de serrage 4d.

Les différentes sangles 4a, 4b, 4c, 4d, 4e, 4f sont reliées entre elles au voisinage de la partie inférieure 17 du piano en position de transport.

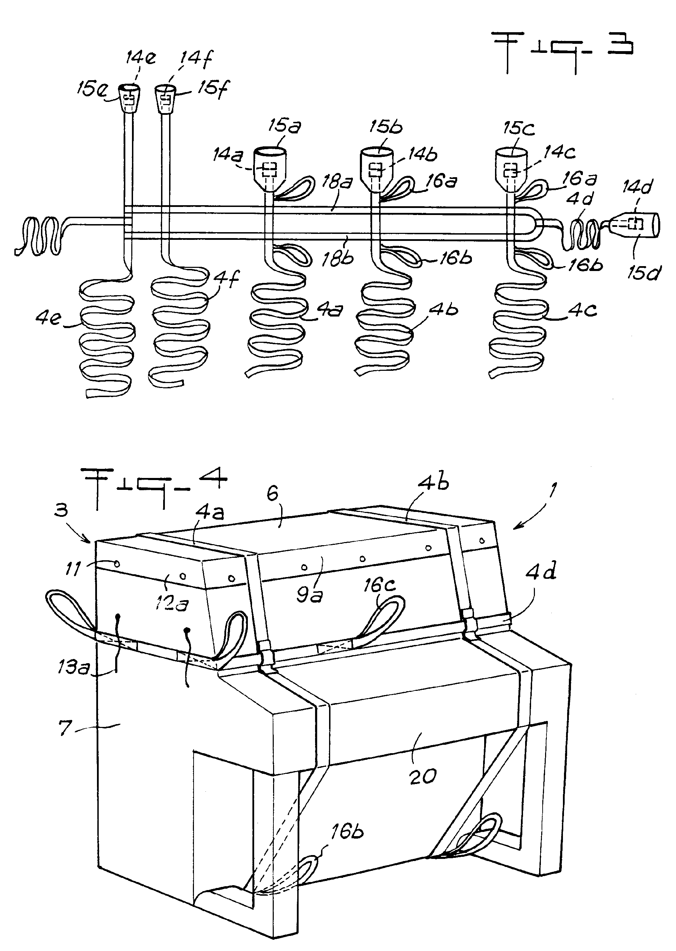

La figure 3 montre la disposition préférée des différentes sangles d'un ensemble de protection 1 pour piano à queue.

Comme on le voit sur cette figure 3, la portion médiane de la sangle de serrage 4d est constituée de deux lanières 18a et 18b parallèles fixées à l'une de leurs extrémités sur la sangle supplémentaire 4e et à l'autre de leurs extrémités à une portion d'extrémité de la sangle de serrage 4d, la deuxième portion d'extrémité de ladite sangle de serrage 4d étant fixée sur la sangle supplémentaire 4e. Les sangles de portage 4a, 4b, et 4c et les sangles supplémentaires 4e et 4f sont fixées perpendiculairement sur les lanières 18a et 18b.

De façon à faciliter la mise en place des sangles sur la housse de protection 3 et à les reconnaître, chaque type de sangle peut être affecté d'une couleur spécifique et les passants correspondants sont de préférence de la même couleur. Par exemple, les sangles de portage 4a, 4b et 4c ainsi que les passants 5a, 5b et 5c peuvent être bleus, la sangle de serrage 5d peut être jaune, les sangles supplémentaires 4e et 4f et les passants 5e et 5f peuvent être rouges. De même les poignées 16a et 16b situées de part et d'autre du piano 2 peuvent être de couleurs différentes.

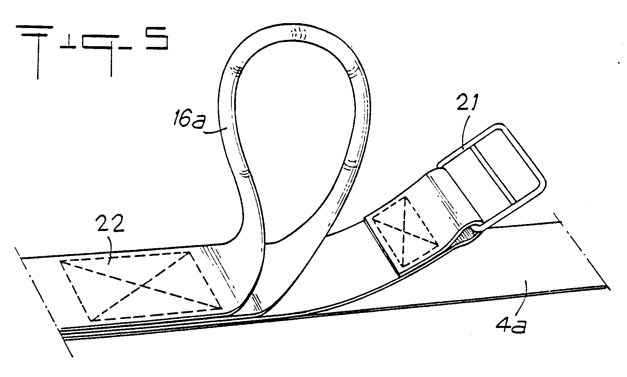

La figure 4 montre un mode de réalisation d'un ensemble de protection et de portage 1 pour un piano droit 2. L'ensemble de protection comporte une hausse de protection 3 dont la jupe 7 est conformée pour recouvrir le couvercle de clavier 20. En dessous du clavier 20 la jupe 7 est prolongée par des pans comportant des cordons latéraux non représentés sur le dessin de manière à pouvoir serrer la partie basse de la jupe 7 contre la partie inférieure du piano droit 2. La partie de la jupe 7 située au dessus du clavier 20 est ajustable en hauteur à l'aide de cordons 13a fixés à la jupe 7 et, coopérant avec des oeillets 11 prévus au bord 12a d'un pan de toile 9a fixé sur le pourtour de la paroi supérieure 6 de la housse 3. La housse 3 est recouverte de cuir au voisinage des arêtes supérieures du piano 2 et au voisinage du clavier 20.

Le piano droit 2 recouvert de la housse de protection appropriée 2 est ceinturé dans des plans verticaux par deux sangles de portage 4a et 4b comportant des poignées de préhension 16a et 16b disposées de chaque côté de la partie inférieure 17 du piano 2. La sangle de serrage 4d, disposée dans un plan horizontal situé au dessus du clavier 20, comporte dans l'exemple de réalisation montré à la figure 4 des poignées 16c permettant de déplacer le piano 2 à l'horizontale.

Comme on le voit sur la figure 5 des boucles d'accrochage 21 sont prévues au voisinage des points d'ancrage 22 des poignées de préhension 16a et 16b sur les sangles de portage 4a, 4b et 4c. Les boucles d'accrochage 21 peuvent être fixées à des moyens d'agrafage 31 prévus sur une lanière d'une bricole ou d'un harnais de déménageur par exemple.

## Revendications

1. Ensemble pour protéger et porter un piano droit ou à queue durant son déménagement, comportant au moins deux sangles de portage (4a, 4c) ceinturant ledit piano dans des plans verticaux transversaux situés au voisinage des extrémités dudit piano et présentant chacune une boucle de serrage et deux poignées de préhension, caractérisé en ce qu'il comporte de plus
une housse de protection (3) adaptée au type de piano et conformée pour recouvrir et protéger au moins la face supérieure et les faces latérales du piano (2), et des passants (5) prévus sur la face exteme de la housse de protection (3) guidant lesdites sangles de portage (4a, 4c) ceinturant ledit piano (2) recouvert de ladite housse (3), lesdites poignées de préhension étant prévues de part et d'autre de la partie inférieure (17) du piano droit (2) ou du côté de la joue rectiligne du piano à queue, celui-ci étant dans la position de transport soit verticale sur ses pieds (piano droit) soit couchée sur la joue droite (piano à queue).

2. Ensemble selon la revendication 1, caractérisé en ce qu'il comporte, en outre, une sangle de serrage (4d) guidée par des passants (5) et ceinturant ledit piano recouvert de ladite housse soit au droit des parois latérales dudit piano immédiatement au-dessus du couvercle de clavier (piano droit), soit au droit de la joue incurvée et d'au moins une partie des parois latérales adjacentes (piano à queue), ladite sangle de serrage (4d) présentant une boucle de serrage (14d).

3. Ensemble selon la revendication 2, caractérisé en ce qu'il comporte en plus des sangles supplémentaires (4e, 4b) destinées à ceinturer le piano dans des plans sensiblement perpendiculaires aux plans des sangles de portage (4a, 4b, 4c) et au plan de la sangle de serrage (4d).

4. Ensemble selon l'une quelconque des revendications 2 et 3 caractérisé en ce que la sangle de serrage (4d) est constituée, dans sa partie médiane, de deux lanières 18a et 18b parallèles auxquelles sont fixées les sangles de portage (4a, 4b, 4c) et éventuellement les sangles supplémentaires (4e, 4f).

5. Ensemble selon l'une quelconque des revendications 1 et 4, caractérisé en ce que la housse (3) est réalisée dans une toile de lin doublée sur sa face interne d'une couche de mousse fixée sur un tissu en jersey et est recouverte de cuir sur les zones (8) de sa face externe voisines des arêtes du piano (2).

6. Ensemble selon l'une quelconque des revendications 1 à 5, caractérisé en ce que la housse (3) est munie de moyens d'ajustement (9a, 9b, 13) permettant de régler l'une de ses dimensions en fonction du gabarit du piano (2).

7. Ensemble selon l'une quelconque des revendications 1 à 6 caractérisé en ce que les sangles de portage (4a, 4b, 4c) sont munies de deux boucles d'accrochage (21) fixées repsectivement au voisinage des points d'ancrage (22) des poignées de préhension (16a, 16b).

8. Ensemble selon l'une quelconque des revendications 1 à 7, caractérisé en ce que les boucles de serrage (14a, 14b, 14c) des sangles (4) sont entourées par un manchon en cuir (15a, 15b, 15c) destiné à protéger le piano (2).

## Patentansprüche

1. Schutz- und Trageinheit zum Transport von Stehklavieren oder Flügeln bei einem Umzug, bestehend aus wenigstens zwei Traggurten (4a, 4c), welche das betreffende Klavier in vertikalen Ebenen in der Nähe der äußeren Enden des Klaviers umschlingen und welche jeweils mit einer Spannschnalle und zwei Tragschlaufen versehen sind, dadurch **gekennzeichnet**, daß dieselbe zusätzlich eine an die Art und Form des Klaviers angepaßte Schutzhülle (3) umfaßt, welche wenigstens die obere Fläche und die Seitenflächen des Klaviers bedeckt und schützt, und daß auf der Außenfläche der Schutzhülle (3) Gurtführungen (5) vorgesehen sind, durch welche die das Klavier (2) mit seiner Schutzhülle (3) umschlingenden Traggurte (4a, 4c) hindurchgeführt sind, wobei die vorgesehenen Tragschlaufen (16a, 16b) im Fall eines stehenden Klaviers (2) beidseitig des unteren Teils (17) und im Fall eines Flügels beidseitig der geradlinigen im wesentlichen der Transportposition entsprechenden Seitenwandung angeordnet sind, und wobei im Fall eines stehenden Klaviers dasselbe auf seinen Füßen steht, während im Fall eines Flügels derselbe auf seine seitliche Wandung umgelegt ist.

2. Schutz- und Trageinheit nach Anspruch 1, dadurch **gekennzeichnet**, daß dieselbe zusätzlich einen durch Gurtführungen (5) geführten Spanngurt (4d) aufweist, welcher das von der Schutzhülle 3 umhüllte Klavier umschlingt, wobei dieser Spanngurt (4d) im Fall eines stehenden Klaviers unmittelbar oberhalb des Tastaturdeckels (20) angeordnet ist, während im Fall eines Flügels dieser Spanngurt (4d) um die gekrümmte Seitenwandung und wenigstens einen Teil der daran anschließenden Wandungsbereiche geführt ist, und wobei dieser Spanngurt (4d) zusätzlich mit einer Spannschnalle (14d) versehen ist.

3. Schutz- und Trageinheit nach Anspruch 2, dadurch **gekennzeichnet**, daß dieselbe zusätzliche Spanngurte (4e, 4f) aufweist, welche das Klavier (2) in Ebenen umschlingen, welche im wesentlichen senkrecht zu den Ebenen der Traggurte (4a bis c) und der Ebene des Spanngurtes (4d) verlaufen.

4. Schutz- und Trageinheit nach Anspruch 2 oder 3, dadurch **gekennzeichnet**, daß der Spanngurt (4d) in seinem mittleren Bereich durch zwei parallele Riemen (18a, 18b) gebildet ist, an welchen die Traggurte (4a bis c) und eventuell auch noch die zusätzlichen Spanngurte (4e, 4f) befestigt sind.

5. Schutz- und Trageinheit nach Anspruch 1 oder 2, dadurch **gekennzeichnet**, daß die Schutzhülle (3) aus einem Leinengewebe besteht, welches auf seiner Innenfläche mit einer Schaumstoffschicht bedeckt ist, die auf einem Jerseygewebe befestigt ist, und daß die Schutzhülle 3 auf ihrer Außenfläche im Bereich der Kanten des Klaviers mit Leder bedeckte Bereiche (8) aufweist.

6. Schutz- und Trageinheit nach einem der Ansprüche 1 bis 5, dadurch **gekennzeichnet**, daß die Schutzhülle (3) mit Einstellmitteln (9a, 9b, 13) versehen ist, welche eine Anpassung an die jeweiligen Abmessungen des Klaviers (2) gestatten.

7. Schutz- und Trageinheit nach einem der Ansprüche 1 bis 6, dadurch **gekennzeichnet**, daß die Traggurte (4a bis c) jeweils in der Nähe der Befestigungspunkte (22) für die Tragschlaufen (16a, b) mit zwei Tragringen (21) versehen sind.

8. Schutz- und Trageinheit nach einem der Ansprüche 1 bis 7, dadurch **gekennzeichnet**, daß die Spannschnallen (14 a bis c) der Gurte (4) von Ledermanschetten (15a bis c) umgeben sind, welche dem Schutz des Klaviers (2) dienen.

## Claims

1. Assembly for protecting and carrying an upright or grand piano during removal thereof, comprising at least two carrrying straps (4a, 4c) encompassing said piano in transverse vertical planes situated in the vicinty of the ends of said piano and each having a tightening buckle and two gripping handles, characterised in that it further comprises a protective blanket (3) adapted to the type of piano and shaped to cover and protect at least the upper surface and the side surfaces of the piano (2), and loops (5) provided on the outer surface of the protective blanket (3) guiding said carrying straps (4a, 4c) encompassing said piano (2) covered with said blanket (3), said gripping handles being provided on either side of the lower portion (17) of the upright piano (2) or on the side of the rectilinear side of the grand piano, the latter being in the transport position either vertical on its legs (upright piano) or lying on the straight side (grand piano).

2. Assembly according to claim 1, characterised in that it further comprises a tightening strap (4d) guided through loops (5) and encompassing said piano covered with said blanket either opposite the side panels of said piano immediately above the keyboard lid (upright piano), or opposite the curved side and at least part of the adjacent side panels (grand piano), said tightening strap (4d) having a tightening buckle (14d).

3. Assembly according to claim 2, characterised in that it further comprises additional straps (4e, 4b) designed to encompass the piano in planes substantially perpendicular to the planes of the carrying straps (4a, 4b, 4c) and to the plane of the tightening strap (4d).

4. Assembly according to either of claims 2 and 3, characterised in that the tightening strap (4d) consists in its central portion of two paralles bands (18a and 18b) to which are fixed the carrying straps (4a, 4b, 4c) and, if occasion arises, the additional straps (4e, 4f).

5. Assembly according to either of claims 1 and 4, characterised in that the blanket (3) is made of a linen cloth lined on its inner surface with a layer of foam fixed to a jersey fabric and is covered with leather in the zones (8) of its outer surface close to the edges of the piano (2).

6. Assembly according to any of claims 1 to 5, characterised in that the blanket (3) is provided with adjusting means (9a, 9b, 13) making it possible to regulate one of its dimensions as a function of the overall size of the piano (2).

7. Assembly according to any of claims 1 to 6, characterised in that the carrying straps (4a, 4b, 4c) are provided with two fixing buckles (21) fixed in the vicinty of the anchor points (22) of the gripping handles (16a, 16b) respectively.

8. Assembly according to any of claims 1 to 7, characterised in that the tightening buckles (14a, 14b, 14c) of the straps (4) are surrounded by a leather sleeve (15a, 15b, 15c) designed to protect the piano (2).
